# EUROPÄISCHE PATENTSCHRIFT

(11) **EP 3 603 772 B1**
(45) Veröffentlichungstag und Bekanntmachung des Hinweises auf die Patenterteilung: **23.12.2020**
(21) Anmeldenummer: 19187166.4
(22) Anmeldetag: 19.07.2019
(51) Int. Cl.: B01D 53/26, B01D 53/04, B60T 17/00

(54) **DRUCKLUFT-TROCKNUNGSVORRICHTUNG**
COMPRESSED AIR DRYER
DISPOSITIF DE SÉCHAGE PAR AIR COMPRIMÉ

(30) Priorität: 31.07.2018 DE 202018104403 U
(43) Veröffentlichungstag der Anmeldung: 05.02.2020
(73) Patentinhaber: Manitowoc Crane Group France SAS, 69574 Dardilly Cedex (FR)
(72) Erfinder: SCHMITHÜSEN, Thomas, 26419 Schortens (DE)
(74) Vertreter: SSM Sandmair

(56) Entgegenhaltungen:
- DE-A1- 19 600 377
- US-A1- 2014 116 534
- US-A1- 2015 251 645
- US-B1- 7 326 277

## Beschreibung

Die vorliegende Erfindung betrifft eine Trocknungsvorrichtung zum Trocknen von Frischluft zur Versorgung einer Druckluftanlage eines Fahrzeugs, insbesondere einer mobilen Arbeitsmaschine, etwa einer Baumaschine oder eines Mobilkrans.

Bremsanlagen von Baumaschinen, Mobilkranen und ähnlichen mobilen Kraftfahrzeugen sind in der Regel als sogenannte Druckluftbremsen ausgestaltet. Für die Erzeugung der benötigten Druckluft wird Umgebungsluft angesaugt, verdichtet und anschließend entfeuchtet, um Korrosionsschäden an der Druckluftanlage zu verhindern. Da die Verdichtung zumeist durch ölgeschmierte Kolbenverdichter erfolgt, ist zudem eine Reinigung der Frischluft erforderlich.

Zur Entfeuchtung der Druckluft sind verschiedene Trocknungsverfahren bekannt, welche sich der physikalischen Prinzipien der Kondensation, der Diffusion oder der Sorption (Absorption/Adsorption) bedienen. Adsorptionsverfahren werden wiederum nach der Art der Regeneration des verwendeten Adsorptionsmittels in Vakuumregenerations-, Warmregenerations- und Kaltregenerationsverfahren unterteilt.

Bei der Trocknung der Druckluft durch Adsorption strömt die zu trocknende Luft durch ein sogenanntes Adsorptionsmittel, sodass sich in der Druckluft enthaltenes Wasser an der inneren und der äußeren Oberfläche eines porösen Adsorptionsmittels anlagert, ohne dass hierbei eine chemische Verbindung erfolgt. Hierfür weist das Adsorptionsmittel eine hohe Oberfläche auf, um das Anlagern von Wasser zu begünstigen. Gebräuchliche Adsorptionsmittel sind Aluminiumoxyd, Silikagel und Aktivkohle, aber auch Molekularsiebe.

Sobald das Adsorptionsmittel durch Wasseranlagerungen gesättigt ist, muss das Adsorptionsmittel regeneriert werden, indem das angelagerte Wasser dem Adsorptionsmittel wieder entzogen wird. Diese sogenannte Desorption erfolgt bei der Kaltregeneration ohne zusätzliche Wärmezufuhr. Hierfür wird ein Teil der zuvor getrockneten Druckluft auf nahezu Umgebungsdruck entspannt und durch das gesättigte Adsorptionsmittel geleitet. Der durch die Entspannung extrem trockene Luftstrom nimmt das angelagerte Wasser auf und wird mit diesem über ein Auslassventil aus dem System geführt.

Um bei der Adsorptionstrocknung die Anlagerung von Wasser am Adsorptionsmittel zu begünstigen, soll die Temperatur der dem Adsorptionsmittel zugeführten Druckluft nicht wesentlich höher sein als die Temperatur der Umgebungsluft. Die zu trocknende Luft wird daher nach der Verdichtung in einen Wärmetauscher gekühlt, wobei bei bekannten Systemen die Abwärme in die Umgebung abgeführt wird US 2014/116534 A1 offenbart eine solche Trocknungsvorrichtung.

Bekannte Adsorptions-Kaltregenerations-Trocknungsvorrichtungen nehmen jedoch ein erhebliches Bauvolumen ein, was beim nicht-stationären Einsatz in Fahrzeugen und den dort vorherrschenden Platzverhältnissen stets einen Nachteil darstellt.

Es ist die Aufgabe der vorliegenden Erfindung, diesem Problem abzuhelfen und das Bauvolumen einer Adsorptions-Kaltregenerations-Trocknungsvorrichtung gegenüber bekannte Lösungen deutlich zu verringern.

Die erfindungsgemäße Trocknungsvorrichtung umfasst hierfür eine im Frischluft-Strömungsweg einem Verdichter nachgeschaltete Kühleinrichtung, welche Wärme aus der vom Verdichter stammenden Frischluft abführt, einen im Frischluft-Strömungsweg der Kühleinrichtung nachgeschalteten Trocknungsmittelbehälter mit einem Adsorptionsmittel, welches der den Trocknungsmittelbehälter durchströmenden Frischluft Wasser entzieht, und einen im Frischluft-Strömungsweg dem Trocknungsmittelbehälter nachgeschalteten Regenerationsbehälter, welcher einen ersten Teil der aus dem Trocknungsmittelbehälter stammenden Frischluft aufnimmt und bedarfsweise wieder an den Trocknungsmittelbehälter abgibt, und welcher der aufgenommenen Frischluft von der Kühleinrichtung abgeführte Wärme zuführt.

Mit anderen Worten wird gemäß der vorliegenden Erfindung die Wärme, welche der vom Verdichter komprimierten Luft über die Kühleinrichtung entzogen wurde, zumindest teilweise dazu genutzt, die verdichtete, getrocknete und im Regenerationsbehälter befindliche Luft zu erwärmen.

Durch diesen zusätzlichen Wärmeeintrag wird die Wasseraufnahmefähigkeit der ohnehin schon getrockneten Luft im Regenerationsbehälter weiter erhöht, was letztendlich zu einer besseren Desorption in der Regenerationsphase führt, wenn das Adsorptionsmittel von der aus dem Regenerationsbehälter stammenden Luft durchströmt wird.

Aufgrund der besseren Trocknungsfähigkeit der im Regenerationsbehälter gespeicherten Luft kann die zur Regeneration notwendige Luftmenge und folglich auch das Volumen des Regenerationsbehälters reduziert werden, was gegenüber bekannten Lösungen zu einem verringerten Bauvolumen der Trocknungsvorrichtung führt.

Bei der vorliegenden Erfindung führt die Kühleinrichtung die Wärme aus der vom Verdichter komprimierten Frischluft unmittelbar an den Regenerationsbehälter ab. Dies wird dadurch erreicht, dass die Kühleinrichtung sich in unmittelbarer Umgebung zu diesem befindet.

Dabei überträgt die Kühleinrichtung die Wärme im Wesentlichen mittels Wärmestrahlung an den Regenerationsbehälter. Daraus folgt, dass sich die Kühleinrichtung und der Regenerationsbehälter im Wesentlichen nicht berühren. Alternativ, aber nicht Teil der vorliegenden Erfindung, kann jedoch ebenso vorgesehen sein, dass dei Wärmestrom zwischen Kühleinrichtung und Regenerationsbehälter im Wesentlichen mittels Wärmeleitung oder Wärmetransport (Konvektion) übertragen wird. Eine primäre Übertragung mittels Wärmeleitung erfordert allerdings, dass die Kühleinrichtung und der Regenerationsbehälter gemeinsame oder stofflich direkt miteinander verbundene Elemente aufweisen. Hier ist zu beachten, dass der Regenerationsbehälter, sofern als Druckbehälter ausgeführt, bestimmte sicherheitstechnische Anforderungen erfüllen muss. Bei einer strukturellen Angliederung der Kühleinrichtung an den Regenerationsbehälter müssen diese Anforderungen selbstverständlich ebenfalls beachtet werden. Eine "Beabstandung" der Kühleinrichtung vom Regenerationsbehälter mit einer damit einhergehenden Wärmeübertragung mittels Strahlung und/oder Wärmetransport erlaubt hingegen die Verwendung standardisierter, sicherheitstechnisch bereits zertifizierter und somit kostengünstiger Bauteile für die Kühleinrichtung und insbesondere den Regenerationsbehälter.

Die Kühleinrichtung umfasst eine Kühlwendel, insbesondere kann als eine Kühlwendel ausgestaltet sein. Während für die Zwecke der Kühleinrichtung grundsätzlich jeder bekannte Wärmetauscher eingesetzt werden könnte, bietet eine Kühlwendel aus einem spiralförmig gebogenen Rohr den Vorteil, dass sie sich nicht mit Eis oder Schmutzpartikeln zusetzen kann, wie dies beispielsweise bei anderen Arten von Wärmetauschern wie etwa Plattenkühlern der Fall sein kann. Den gegenüber anderen Wärmetauschern vergleichsweise hohen Platzbedarf von Kühlwendeln macht sich die vorliegende Erfindung dadurch zunutze, indem hier die Kühlwendel den Regenerationsbehälter umfänglich umläuft. Das ansonsten nicht nutzbare, von der Kühlwendel umlaufene Volumen wird folglich vom Regenerationsbehälter eingenommen, sodass sich das für die Trocknungsvorrichtung erforderliche Bauvolumen somit weiter reduziert.

Eine maximale Einsparung des erforderlichen Bauvolumens wird gemäß einer weiteren Ausführungsform der vorliegenden Erfindung dadurch erreicht, dass das Füllvermögen des Regenerationsbehälters für eine vollständige Regeneration des Trocknungsmittelbehälters ausgelegt ist. Mit anderen Worten ist der Regenerationsbehälter so bemessen, dass die in ihm gespeicherte Luftmenge lediglich dazu ausreicht, eine vollständige Desorption des im Trocknungsmittelbehälter vorhandenen Adsorptionsmittels zu erreichen. Eine darüber hinausgehende Speicherkapazität des Regenerationsbehälters ist aufgrund des hierfür zusätzlich erforderlichen Bauvolumens und der fehlenden Verwendungsmöglichkeit der zusätzlich in Regenerationsbehälter gespeicherten Luftmenge hier nicht wünschenswert.

In ähnlicher Weise kann bei einer weiteren Ausführungsform der vorliegenden Erfindung das Adsorptionsvermögen des Trocknungsmittelbehälters für eine vollständige Ladung eines Druckspeichers ausgelegt sein, welcher einen zweiten Teil der aus dem Trocknungsmittelbehälter stammenden Frischluft aufnimmt und bedarfsweise an die Druckluftanlage abgibt. Mit anderen Worten kann die Beschaffenheit und Menge des im Trocknungsmittelbehälter vorhandenen Adsorptionsmittel so bemessen sein, dass dieses gerade für eine Füllung des Druckspeichers ausreicht.

Gemäß einem weiteren Aspekt ermöglicht die vorliegende Erfindung ein Verfahren zum Trocknen der einer Druckluftanlage eines Fahrzeugs, insbesondere einer mobilen Arbeitsmaschine, zugeführten Frischluft, und zwar insbesondere unter Verwendung einer wie voranstehend beschriebenen Trocknungsvorrichtung.

Ein solches Verfahren kann dabei die folgenden Schritte umfassen:
- Abführen von Wärme aus mittels eines Verdichters verdichteter Frischluft in einer im Frischluft-Strömungsweg dem Verdichter nachgeschalteten Kühleinrichtung;
- Entziehen von Wasser aus der Frischluft, indem diese durch einen im Frischluft-Strömungsweg der Kühleinrichtung nachgeschalteten und ein Adsorptionsmittel aufweisenden Trocknungsmittelbehälter geleitet wird;
- Speichern eines Teils der aus dem Trocknungsmittelbehälter austretenden Frischluft in einem in Frischluft-Strömungsweg dem Trocknungsmittelbehälter nachgeschalteten Regenerationsbehälter, wobei der gespeicherten Frischluft von der Kühleinrichtung abgeführte Wärme zugeführt wird;
- bedarfsweises Abgeben der im Regenerationsbehälter gespeicherten Frischluft an den Trocknungsmittelbehälter zur Regeneration des darin enthaltenen Adsorptionsmittels.

Die Erfindung wird im Folgenden anhand einer bevorzugten Ausführungsform und unter Bezugnahme auf die beiliegenden Figuren näher erläutert. Sie kann alle hierin beschriebenen Merkmale einzeln sowie in jedweder sinnvollen Kombination umfassen.

Es zeigen:
- Figur 1: Schaltplan der erfindungsgemäßen Trocknungsvorrichtung;
- Figur 2: Perspektivische Ansicht einer erfindungsgemäßen Baueinheit aus einer Kühleinrichtung und einem Regenerationsbehälter.

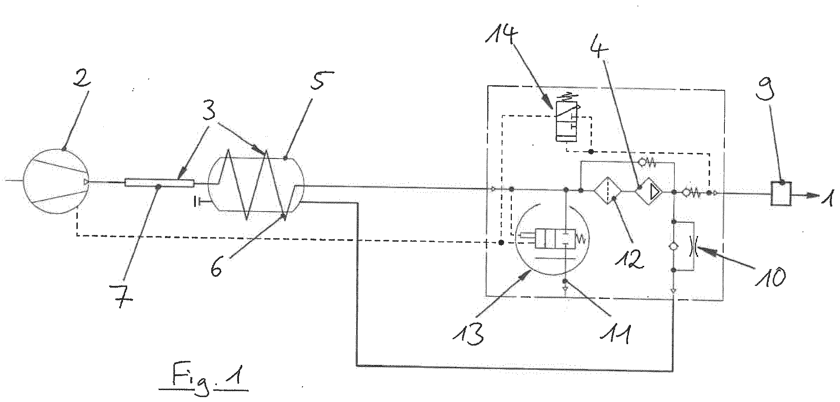

Die Figur 1 zeigt eine erfindungsgemäße Trocknungsvorrichtung, welche Druckluft für eine Druckluftanlage 1 bereitstellt.

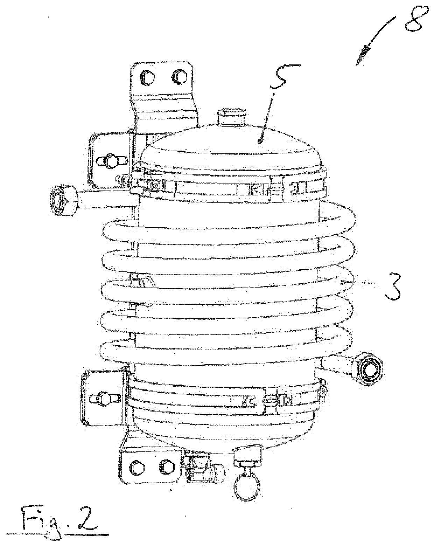

Mittels eines Verdichters 2 wird Umgebungsluft angesaugt und verdichtet. Die durch die Verdichtung erwärmte Luft wird in einem dem Verdichter 2 nachgeschalteten Wärmetauscher 3 wieder abgekühlt, wobei die abgeführte Wärme zumindest teilweise direkt dem Regenerationsbehälter 5 und der darin gespeicherten Druckluft zugeführt wird. Wie in der Figur 1 zu erkennen ist, wird der Wärmetauscher bzw. die Kühleinrichtung 3 durch ein ausreichend dickes und langes Rohr gebildet, welches den als zylindrischen Druckbehälter ausgestaltetem Regenerationsbehälter 5 spiralförmig umläuft. Wie in der Figur 2 besser zu sehen ist, ist die aus dem Rohr 7 gebildete Kühlwendel 6 dabei so ausgestaltet, dass Kondensat, welches sich unter Umständen bei der Abkühlung im Rohr 7 bildet, ablaufen kann. Der mittels der Kühleinrichtung 3 abgekühlte Luftstrom wird sodann einem Filter 12 zugeführt, welcher etwaige Verunreinigungen aus dem Luftstrom entfernt. Der verdichtete, gekühlte und gereinigte Luftstrom wird dann dem Trocknungsmittelbehälter 4 zugeführt, um dort ein darin befindliches Adsorptionsmittel zu durchströmen. Hierbei lagert sich das in der Luft gespeicherte Wasser an der Oberfläche des Adsorptionsmittels an. Der nunmehr auch getrocknete Luftstrom wird größtenteils im nachgeschalteten Druckspeicher 9 gespeichert, um bei Bedarf der Druckluftanlage 1 zur Verfügung zu stehen. Ein weiterer, kleinerer Teil des den Trocknungsmittelbehälter 4 verlassenden Luftstroms wird dem Regenerationsbehälter 5 zugeführt und in diesem gespeichert. Der zuvor von der Kühleinrichtung 3 abgeführte Wärmestrom wird zumindest teilweise dem Regenerationsbehälter 5 zugeführt, sodass sich die darin befindliche Luft erwärmt.

Nachdem die Aufnahmekapazität des Adsorptionsmittels im Trocknungsmittelbehälter 4 durch die Trocknung des den Trocknungsmittelbehälter 4 durchströmenden Luftstroms erschöpft ist, wird mittels des Schaltventils 14 die Luftförderung des Verdichters 2 unterbrochen, sodass das im Trocknungsmittelbehälter 4 befindliche Adsorptionsmittel mittels einer sogenannten Kaltregeneration getrocknet werden kann. Durch Schalten des Schaltventils 13 wird die im Regenerationsbehälter 5 gespeicherte Luft in umgekehrter Richtung durch den Trocknungsmittelbehälter 4 und über das Ventil 13 und den Auslass 11 in die Umgebung abgeleitet. Vor dem Eintritt in den Trocknungsmittelbehälter 4 wird die aus dem Regenerationsbehälter 5 stammende Druckluft mittels einer Blende bzw. Drossel 10 auf nahezu Umgebungsdruck entspannt und ist somit sehr trocken. Hierdurch kann sie das vormals an der Oberfläche des Adsorptionsmittels angelagerte Wasser leicht aufnehmen und aus dem System abführen. Nach erfolgter Regeneration des Adsorptionsmittels im Trocknungsmittelbehälter 4 können die Ventile 13 und 14 wieder umgeschaltet werden, um eine erneute Adsorptionsphase einzuleiten.

Die Figur 2 zeigt eine Baueinheit 8, welche im Wesentlichen aus einem als Druckbehälter ausgestalteten, zylindrischen Regenerationsbehälter 5, und einer diesen spiralförmig umlaufenden, rohrförmigen Kühlwendel 3 gebildet wird.

Die platzsparende Ausgestaltung der erfindungsgemäßen Trocknungsvorrichtung beruht unter anderem darauf, dass der Regenerationsbehälter 5 im von der Kühlwendel 3 umlaufenen Volumen angeordnet ist. Zudem wird die von der Kühlwendel 3 abgegebene Wärme dazu genutzt, die im Regenerationsbehälter 5 gespeicherte Druckluft zu erwärmen und so deren Wasseraufnahmefähigkeit zu erhöhen. Aufgrund der erhöhten Wasseraufnahmekapazität der Druckluft im Regenerationsbehälter 5 kann die im Regenerationsbehälter 5 zu speichernde Druckluftmenge reduziert werden, sodass auch der Regenerationsbehälter 5 und letzten Endes auch die gesamte Baueinheit 8 verkleinert werden kann.

## Patentansprüche

1. Trocknungsvorrichtung zum Trocknen der einer Druckluftanlage (1) eines Fahrzeugs, insbesondere einer mobilen Arbeitsmaschine zugeführten Frischluft, mit
- einer im Frischluft-Strömungsweg einem Verdichter (2) nachgeschalteten Kühleinrichtung (3) mit einer Kühlwendel (6), welche Wärme aus der vom Verdichter (2) stammenden Frischluft abführt; und
- einem im Frischluft-Strömungsweg der Kühleinrichtung (3) nachgeschalteten Trocknungsmittelbehälter (4) mit einem Adsorptionsmittel, welches der den Trocknungsmittelbehälter (4) durchströmenden Frischluft Wasser entzieht, wobei ein im Frischluft-Strömungsweg dem Trocknungsmittelbehälter (4) nachgeschalteter und von der Kühlwendel (6) umlaufener Regenerationsbehälter (5) einen ersten Teil der aus dem Trocknungsmittelbehälter (4) stammenden Frischluft aufnimmt und bedarfsweise wieder an den Trocknungsmittelbehälter (4) abgibt und der aufgenommenen Frischluft von der Kühlwendel (6) im Wesentlichen mittels Wärmestrahlung an den Regenerationsbehälter (5) abgeführte Wärme zuführt.

2. Trocknungsvorrichtung gemäß Anspruch 1, wobei die Kühleinrichtung (3) einen Strömungskanal (7) mit einer im Wesentlichen positiven Steigung aufweist, insbesondere durch einen solchen gebildet wird.

3. Trocknungsvorrichtung gemäß einem der Ansprüche 1 und 2, wobei die Kühleinrichtung (3) mit dem Regenerationsbehälter (5) eine Baueinheit (8) bildet.

4. Trocknungsvorrichtung gemäß einem der Ansprüche 1 bis 3, wobei der Regenerationsbehälter (5) als im Wesentlichen zylindrischer Druckbehälter ausgebildet ist.

5. Trocknungsvorrichtung gemäß einem der Ansprüche 1 bis 4, wobei das Füllvermögen des Regenerationsbehälters (5) für eine vollständige Regeneration des Trocknungsmittelbehälters (4) ausgelegt ist.

6. Trocknungsvorrichtung gemäß einem der Ansprüche 1 bis 5, mit ferner einem im Frischluft-Strömungsweg dem Trocknungsmittelbehälter (4) nachgeschalteten Druckspeicher (9), welcher einen zweiten Teil der aus dem Trocknungsmittelbehälter (4) stammenden Frischluft aufnimmt und bedarfsweise an die Druckluftanlage (1) abgibt, wobei das Adsorptionsvermögen des Trocknungsmittelbehälters (4) für eine vollständige Ladung des Druckspeichers (9) ausgelegt ist.

## Claims

1. A drying device for drying the intake air fed to a compressed-air system (1) of a vehicle, in particular a mobile work machine, comprising:
- a cooling device (3) which is connected downstream of a compressor (2) in the intake air flow path and comprises a cooling helix (6) which draws off heat from the intake air coming from the compressor (2); and
- a desiccant container (4) which is connected downstream of the cooling device (3) in the intake air flow path and comprises an adsorbent which removes water from the intake air flowing through the desiccant container (4), wherein a regeneration container (5) which is connected downstream of the desiccant container (4) in the intake air flow path and encircled by the cooling helix (6) receives a first portion of the intake air coming from the desiccant container (4) and, as required, returns it to the desiccant container (4) and feeds heat, drawn off by the cooling helix (6) to the regeneration container (5) substantially by means of thermal radiation, to the received intake air.

2. The drying device according to Claim 1, wherein the cooling device (3) comprises and is in particular formed by a flow channel (7) which exhibits a substantially positive pitch.

3. The drying device according to any one of Claims 1 and 2, wherein the cooling device (3) forms an assembly (8) with the regeneration container (5).

4. The drying device according to any one of Claims 1 to 3, wherein the regeneration container (5) is embodied as a substantially cylindrical pressure container.

5. The drying device according to any one of Claims 1 to 4, wherein the filling capacity of the regeneration container (5) is designed for one complete regeneration of the desiccant container (4).

6. The drying device according to any one of Claims 1 to 5, further comprising a pressure reservoir (9) which is connected downstream of the desiccant container (4) in the intake air flow path and receives a second portion of the intake air coming from the desiccant container (4) and dispenses it, as required, to the compressed-air system (1), wherein the adsorption capacity of the desiccant container (4) is designed for one complete charge of the pressure reservoir (9).

## Revendications

1. Dispositif de séchage permettant le séchage de l'air frais mené dans une installation d'air comprimé (1) d'un véhicule, notamment d'une machine de travail mobile, avec
- un dispositif de refroidissement (3), disposé dans le trajet d'écoulement de l'air frais après un compresseur (2), doté d'un serpentin de refroidissement (6), lequel évacue la chaleur à partir de l'air frais provenant du compresseur (2) ; et
- un récipient de produit déshydratant (4), disposé dans le trajet d'écoulement de l'air frais après le dispositif de refroidissement (3), avec un produit d'adsorption, lequel prélève l'eau dans l'air frais traversant le récipient de produit déshydratant (4), où un récipient de régénération (5), disposé dans le trajet d'écoulement de l'air frais après le récipient de produit déshydratant (4) et entouré par le serpentin de refroidissement (6), absorbe une première partie de l'air frais provenant du récipient de produit déshydratant (4) et le délivre de nouveau en fonction des besoins au récipient de produit déshydratant (4) et amène de la chaleur évacuée à l'air frais absorbé par le serpentin de refroidissement (6) essentiellement au moyen du rayonnement thermique au récipient de régénération (5).

2. Dispositif de séchage selon la revendication 1, dans lequel le dispositif de refroidissement (3) présente un canal d'écoulement (7) avec une inclinaison essentiellement positive, est notamment formé par un tel canal.

3. Dispositif de séchage selon l'une des revendications 1 et 2, dans lequel le dispositif de refroidissement (3) forme une unité (8) avec le récipient de régénération (5).

4. Dispositif de séchage selon l'une des revendications 1 à 3, dans lequel le récipient de régénération (5) est conçu sous la forme d'un récipient sous pression essentiellement cylindrique.

5. Dispositif de séchage selon l'une des revendications 1 à 4, dans lequel la capacité de remplissage du récipient de régénération (5) est prévue pour une régénération complète du récipient de produit déshydratant (4).

6. Dispositif de séchage selon l'une des revendications 1 à 5, doté en outre d'un accumulateur de pression (9) disposé dans le trajet d'écoulement de l'air frais après le récipient de produit déshydratant (4), lequel accumulateur prélève une deuxième partie de l'air frais provenant du récipient de produit déshydratant (4) et le délivre en fonction des besoins à l'installation d'air comprimé (1), où la capacité d'adsorption du récipient de produit déshydratant (4) est prévue pour une charge complète de l'accumulateur de pression (9).
